# EUROPEAN PATENT APPLICATION

(11) **EP 4 685 952 A1**
(43) Date of publication of application: **28.01.2026**
(21) Application number: 25153275.0
(22) Date of filing: 22.01.2025
(51) Int. Cl.: H01M 50/213, H01M 50/503, H01M 50/51, H01M 50/209, H01M 50/289, H01M 50/507

(54) **CONNECTING PIECE AND BATTERY PACK**

(30) Priority: 24.07.2024 CN 202421775419 U
(71) Applicant: Eve Energy Co., Ltd., Huizhou, Guangdong 516006 (CN)
(72) Inventor: LIN, Zheng, Huizhou, Guangdong 516006 (CN)
(74) Representative: Herrero & Asociados, S.L.

(57) **Abstract**

A connecting piece (3) and a battery pack (100) are provided. The connecting piece (3) is configured to connect two battery modules (2) arranged side by side, where a positive electrode of one battery module (2) faces a negative electrode of the other battery module (2). The connecting piece (3) is a "U" shaped structure and includes two connecting bodies (30) that are parallel to each other and spaced apart, and the two connecting bodies (30) of the connecting piece (3) are respectively connected to the positive electrode and the negative electrode facing each other of the two battery modules (2) to couple the two battery modules (2) in series.

## Description

### TECHNICAL FIELD

The present disclosure relates to the field of battery technologies, and in particular, to a connecting piece and a battery pack.

### BACKGROUND

A battery is a product formed by combining multiple cells in series and/or in parallel, and adding single-cell monitoring and thermal management devices. The battery may be formed by a combination of prismatic cells, a combination of cylindrical cells, or a combination of pouch cells, and is widely used in fields such as laptops, power banks, power tools, and electric vehicles.

In related technologies, multiple cells are coupled in series and/or parallel to form a group, that is the positive electrode pole and the negative electrode pole of each cell are welded through battery connecting pieces mainly according to design requirements. However, the battery connecting pieces in related technologies are generally used for connection in the case where the positive electrode poles and negative electrode poles of the cells are located on the same plane. When the number of cells increases or the electrode poles of the cells are arranged opposite to each other, the connecting pieces cannot effectively couple the two electrode poles, which can easily cause a short circuit between the positive electrode and the negative electrode, thereby increasing battery insecurity.

### SUMMARY

In a first aspect, the present disclosure provides a connecting piece, configured to connect two battery modules arranged side by side, wherein a positive electrode of one battery module faces a negative electrode of the other battery module. The connecting piece is a "U" shaped structure and includes two connecting bodies that are parallel to each other and spaced apart, and the two connecting bodies of the connecting piece are respectively connected to the positive electrode and the negative electrode facing each other of the two battery modules to couple the two battery modules in series.

In a second aspect, the present disclosure provides a battery pack, including two wiring output components, two battery modules arranged side by side, and the connecting piece as described above. Each battery module includes a plurality of cell groups, wherein each cell group includes a plurality of cells, with a positive pole and a negative electrode of each cell respectively arranged at opposite ends of the cell along a length direction of the cell; the cell group includes a first side and a second side that are opposite to each other; in the same cell group, the positive poles of all cells are located on the first side of the cell group, while the negative poles of all cells are located on the second side of the cell group. The plurality of cell groups are sequentially arranged along a first direction, and all cells in each battery module are arranged along a second direction, wherein the second direction is perpendicular to the first direction; a positive electrode of any cell group and a negative electrode of an adjacent cell group are located on the same side of the battery module. The plurality of cell groups are sequentially coupled in series in the first direction, the two battery modules are arranged side by side along the second direction, wherein the positive electrode of one battery module and the negative electrode of the other battery modules are facing each other and are electrically coupled together through the connecting piece, to achieve series connection between the two battery modules; the negative electrode of the one battery module and the positive electrode of the other battery module are respectively connected to the two wiring output components.

The connecting piece provided by the present disclosure is bent by itself to form two connecting bodies that are parallel to each other and spaced apart, that is, after bending, the connecting piece forms a "U" shaped structure. The two connecting bodies of the connecting piece are respectively connected to the positive electrode and the negative electrode facing each other of the two battery modules, so as to couple the two battery modules in series. At the same time, the two connecting bodies of the connecting piece are arranged in parallel and spaced apart, which can also separate the positive electrode and the negative electrode of the two battery modules , thereby helping to reduce the risk of short circuits and ensuring the safety of electrical connection.

### BRIEF DESCRIPTION OF THE DRAWINGS

FIG. 1 is a schematic structural diagram of a battery pack provided in some embodiments of the present disclosure.
FIG. 2 is a schematic structural diagram of a battery pack (with a filling fixed layer hidden) provided in some embodiments of the present disclosure.
FIG. 3 is a cross-sectional view of a battery pack provided in some embodiments of the present disclosure.
FIG. 4 is a schematic structural diagram of a battery module provided in some embodiments of the present disclosure.
FIG. 5 is an exploded view of a battery module provided in some embodiments of the present disclosure.

Reference numerals in the drawings:
100, battery pack;
1, box; 11, bottom shell;
2, battery module; 21, cell group; 2101: first side; 2102: second side; 211, cell; 2111, positive pole; 2112, negative pole; 22, connecting bar; 23, cell bracket; 231, mounting hole; 232, positioning block; 24, fixing member;
3, connecting piece; 30, connecting body; 31, through hole;
4, wiring output component; 41, connecting plate; 42, output plate; 421, lead-out portion; 422, output portion;
5, filling and fixing layer;
X, first direction; Y, second direction; Z, third direction.

### DETAILED DESCRIPTION

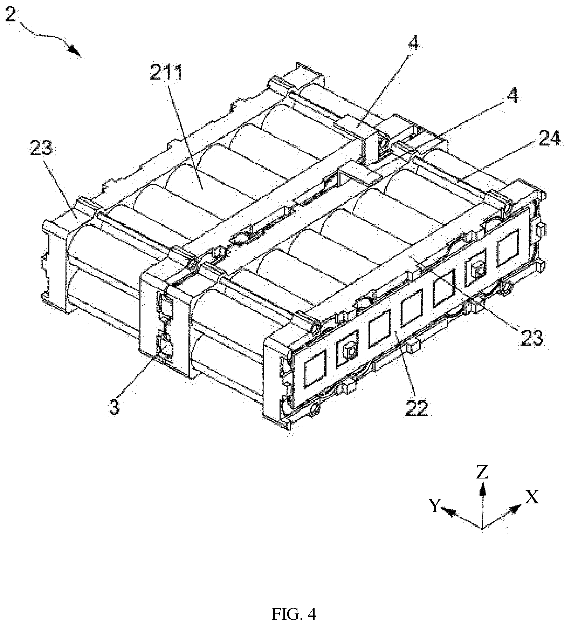

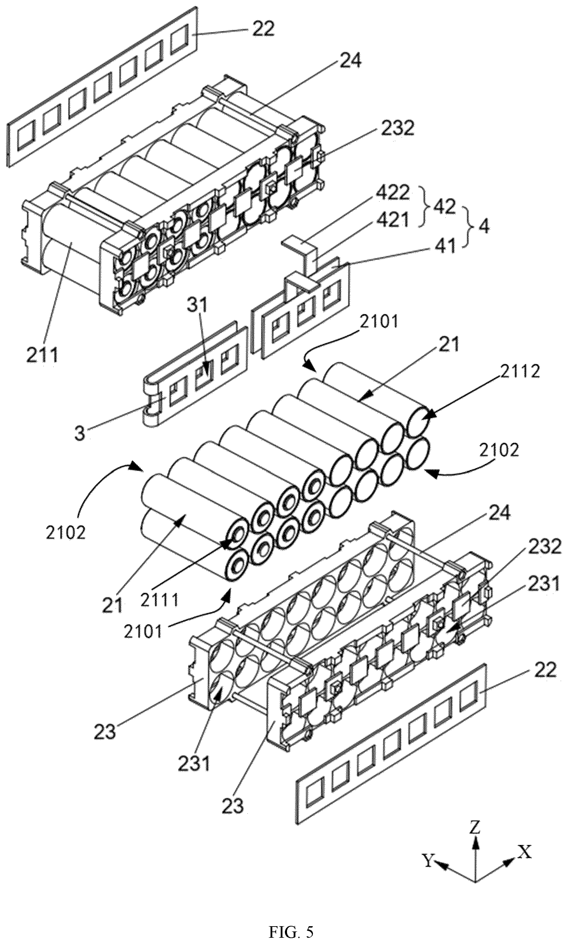

The embodiments of the present disclosure provides a connecting piece configured to connect two battery modules arranged side by side. Specifically, as shown in FIGs. 4 and 5, two battery modules 2 are arranged side by side, and a positive electrode of one battery module 2 faces a negative electrode of the other battery module 2. The connecting piece 3 is bent by itself to form two connecting bodies 30 that are parallel to each other and spaced apart, that is, after bending, the connecting piece 3 forms a "U" shaped structure. The two connecting bodies 30 of the connecting piece 3 are respectively connected to the positive electrode and the negative electrode facing each other of the two battery modules 2, so as to couple the two battery modules 2 in series. At the same time, the two connecting bodies 30 of the connecting piece 3 are arranged in parallel and spaced apart, which can also separate the positive electrode and the negative electrode of the two battery modules 2, thereby helping to reduce the risk of short circuits and ensuring the safety of electrical connection.

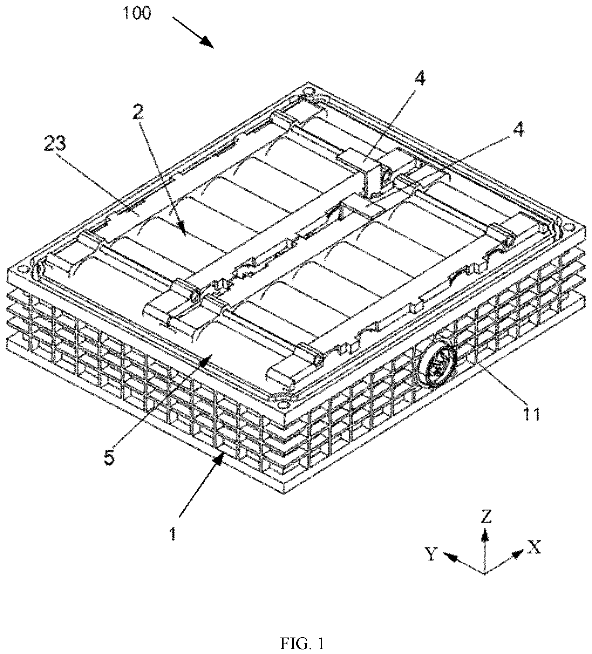

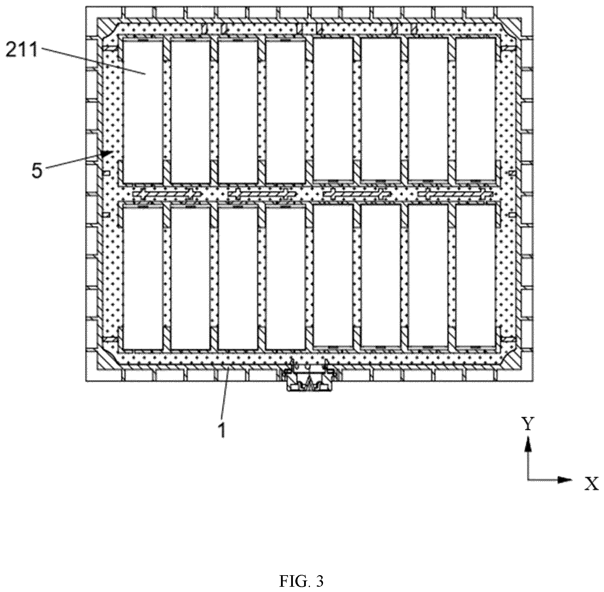

The embodiments of the present disclosure further provides a battery pack. As shown in FIGs. 1 to 5, the battery pack 100 includes the above-mentioned connecting piece 3, two battery modules 2 arranged side by side, a box 1, two wiring output components 4, and a filling and fixing layer 5.

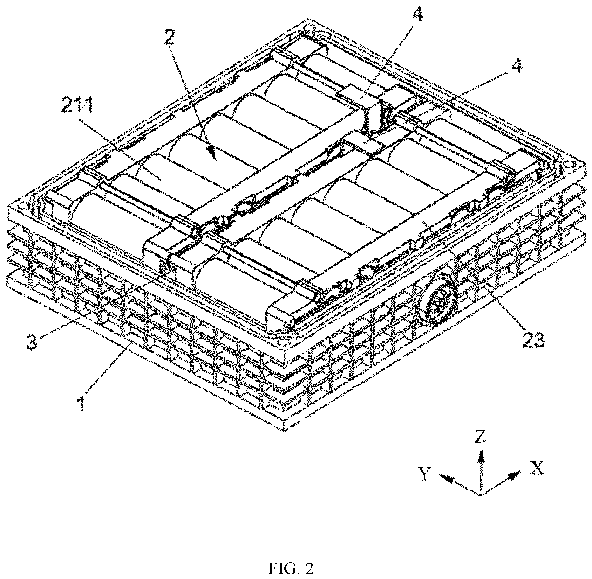

In this embodiment, as shown in FIGs. 1 and 2, the box 1 has a rectangular cuboid structure, and includes a bottom shell 11 and an upper cover (not shown). The upper cover is snap-fitted and connected to a top of the bottom shell to form the box 1 with an internal cavity. The battery modules 2, the connecting piece 3, the wiring output components 4 and the filling and fixing layer 5 are all provided in the box 1, so as to protect the internal structure of the battery pack 100 through the box 1. Of course, in other embodiments, the shape of the box 1 may be designed according to actual requirements, which is not limited herein.

Referring to FIG. 5, each battery module 2 includes a plurality of cell groups 21. Each cell group 21 includes a plurality of cells 211, with a positive pole 2111 and a negative pole 2112 of each cell 211 respectively arranged at opposite ends of the cell 211 along a length direction of the cell 211. The cell group 21 includes a first side 2101 and a second side 2102 that are opposite to each other. In the same cell group 21, the positive poles 2111 of all cells 211 are located on the first side 2101 of the cell group 21, while the negative poles 2112 of all cells 211 are located on the second side 2102 of the cell group 21.

In this embodiment, the plurality of cell groups 21 are sequentially arranged along a first direction X, and all cells 211 in each battery module 2 are arranged along a second direction Y, that is, the length direction of the cells 211 is parallel to the second direction Y, where the second direction Y is perpendicular to the first direction X. The first side 2101 of any one of the cell groups 21 and the second side 2102 of an adjacent cell group 21 are located on the same side of the battery module 2. Therefore, the positive electrode of any one of the cell groups 21 and the negative electrode of an adjacent cell group 21 are located on the same side of the battery module 2.

In this embodiment, the plurality of cell groups 21 are sequentially coupled in series in the first direction X. The two battery modules 2 are arranged side by side along the second direction Y. The positive electrode of one battery module 2 and the negative electrode of the other battery modules 2 are facing each other and are electrically coupled together through the connecting piece 3, to achieve series connection between the two battery modules 2. The negative electrode of the one battery module 2 and the positive electrode of the other battery module 2 are respectively connected to the two wiring output components 4.

Specifically, any two adjacent cell groups 21 are coupled in series through a connecting bar 22. That is, in two adjacent cell groups 21 coupled in series, the positive electrode of one cell group 21 is coupled to the negative electrode of the other cell group 21 through a connecting bar 22, so that the plurality of cell groups 21 in each battery module 2 are coupled in series to form an "overall cell". A positive electrode of a cell group 21 located at one end of the battery module 2 along the first direction X, which is not connected to the connecting bars 22, serves as the positive electrode of the battery module 2; while a negative electrode of a cell group 21 located at an opposite end of the battery module 2 along the first direction X, which is not connected to the connecting bars 22, serves as the negative electrode of the battery module 2.

More specifically, in this embodiment, each battery module 2 includes two cell groups 21 arranged side by side along the first direction X. The connecting bar 22 is parallel to the first direction X and connects the positive electrode of the one cell group 21 and the negative electrode of the other cell group 21. The negative electrode of the one cell group 21, not connected to the connecting bars 22, serves as the negative electrode of the battery module 2. Similarly, the positive electrode of the other cell group 21, not connected to the connecting bars 22, serves as the positive electrode of the battery module 2. It should be noted that, the number of the cell groups 21 within each battery module 2 is not limited, and may be determined according to requirements, as long as the plurality of cell groups 21 within each battery module 2 are coupled in series.

It should be understood that since prismatic cells and pouch cells may generate expansion forces during charge-discharge cycles, which can damage the battery pack, leading to leakage risk. In this embodiment, the cell group 21 is a cylindrical cell group. Cylindrical cells offer consistent internal resistance and lower leakage risks, enhancing safety and stability in use.

In some embodiments, the cell group 21 includes a plurality of cells 211 sequentially arranged along the first direction X, with the length direction of the cells 211 parallel to the second direction Y. That is, the plurality of cells 211 in each cell group 21 are coupled in parallel, and have a certain length in the first direction X. The plurality of cell groups 21 are sequentially arranged along the first direction X to form the battery module 2. The structure is suitable for flat battery module 2 with longer length along the first direction X.

In another embodiments, the cell group 21 includes a plurality of cells 211 sequentially arranged along a third direction Z, with the length direction of the cells 211 parallel to the second direction Y, where the third direction Z, the second direction Y and the first direction X are perpendicular to each other. In this embodiment, the plurality of cells 211 in each cell group 21 are coupled in parallel, and have a certain height in the third direction Z. The plurality of cell groups 21 are sequentially arranged along the third direction Z to form the battery module 2. The structure is suitable for battery module 2 with higher height but shorter length along the first direction X.

In yet another embodiments, the cell group 21 includes a plurality of cell columns sequentially arranged along the first direction X. Each cell column includes a plurality of cells 211 sequentially arranged along the third direction Z, with the length direction of the cells 211 parallel to the second direction Y, where the third direction Z, the second direction Y and the first direction X are perpendicular to each other. In this embodiment, the plurality of cells 211 in the cell group 21 are arranged in a rectangular array, not only allowing more cells 211 to be coupled in parallel, but also shortening the length of the cell group 21 in both the first direction X and the third direction Z, making the structure of the battery module 2 composed of the plurality of cell groups 21 more compact. The cell group 21 in this embodiment is designed according to this structure. Specifically, referring to FIG. 5, each cell group 21 in this embodiment includes eight cylindrical cells 211, the eight cylindrical cells 211 form four cell columns sequentially arranged along the first direction X, with each cell column contains two cylindrical cells arranged along the third direction Z, so as to form a cell group 21 in which eight cylindrical cells are coupled in parallel.

Continuing to refer to FIGs. 4 and 5, in this embodiment, the connecting piece 3 has a first state in which the two connection bodies 30 are planar and a second state in which the two connection bodies 30 are folded in half. When the connecting piece 3 is in the first state, it accommodates the arrangement of the two battery modules 2 side by side along the first direction X. One connection body 30 of the connecting piece 3 is connected to the positive electrode of one battery modules 2, while the other connection body 30 of the connecting piece 3 is connected to the negative electrode of the other battery modules 2. The connecting piece 3 can also be folded in half in order to switch from the first state to the second state, adapting to the two connected battery modules 2 arranged side by side in the second direction Y. By folding the two connection bodies 30 of the connecting piece 3, it's possible to connect the two battery modules 2 in series while reducing the length of the battery pack in the first direction X, making the structure of the battery pack more compact.

Specifically, two battery modules 2 are first arranged side by side along the first direction X, with the positive electrode of one battery module 2 adjacent to the negative electrode of the other battery modules 2. Then, the positive electrode and the negative electrode adjacent to each other of the two battery modules 2 are coupled by the connecting piece 3, so that the two battery modules 2 are coupled in series and formed as a whole in the first direction X. Next, the connecting piece 3 is folded in half, causing two ends of the battery modules 2 that are far away from each other to rotate towards each other until the connecting piece 3 is folded into a "U" shape. The two battery modules 2 are arranged side by side in the second direction Y, with the positive electrodes and the negative electrodes of the two battery modules 2 coupled by the connecting piece 3 being directly opposite to each other. In this embodiment, the connecting piece 3 is connected to the positive electrode or the negative electrode of the battery module 2 first, and then the connecting piece 3 is folded, so that the reliability of the connection between the connecting piece 3 and the positive electrode or the negative electrode of the battery module 2 can be ensured, thereby ensuring the running stability of the battery pack 100.

In some embodiments, in order to ensure structural integrity of the battery module 2, as shown in FIGs. 4 and 5, the battery module 2 further includes two cell brackets 23. The two cell brackets 23 are parallel to each other and spaced apart along the second direction Y. The cell bracket 23 is provided with a plurality of mounting holes 231, and two ends of the cells 211 in the cell group 21 are respectively inserted into a corresponding group of mounting holes 231 on the two cell brackets 23. The cell brackets 23 can position and fix each cell 211 within the cell group 21, preventing any displacement of the cells 21.

In some embodiments, the cell bracket 23 is provided with positioning blocks 232 one its one side facing away from the cells 211, and the connecting piece 3 is provided with through holes 31 at a position corresponding to the positioning block 232. The shape of the positioning block 232 matches the shape of the through hole 31 on the connecting piece 3. The connecting piece 3 is positioned on the cell bracket 23through hole 31 is sleeved over the positioning block 232 via the through hole 31, thereby positioning the connecting piece 3 on the cell bracket 23 of the battery module 2 when the connecting piece 3 is welded to the positive electrode or the negative electrode of the battery module 2. In some embodiments, the battery module 2 further includes a fixing piece 24. The fixing piece 24 is arranged parallel to the second direction Y, with two ends of the fixing piece 24 connected to the two cell brackets 23 respectively to fix the cells 211 of the battery module 2 between the two cell brackets 23. In this embodiment, the fixing member 24 is a threaded rod with threads on its two ends. The two cell brackets 23 are provided with threaded holes at positions on their side edges that are directly opposite, and the two ends of the threaded rod are respectively screwed into two threaded holes directly facing each other on the two cell brackets 23.

In this embodiment, after the two battery modules 2 are coupled in series through the connecting piece 3 and arranged together, a wiring output component 4 is further provided to transmit electrical energy of the battery modules 2. As shown in FIGs. 1, 2, 4 and 5, the positive electrode and the negative electrode of the two battery modules 2 that are not connected to the connecting piece 3 and the connecting bar 22 are respectively coupled to the wiring output components 4, and the wiring output components 4 are coupled to collection lines, so as to complete an output or an input of electrical energy of the battery pack 100.

Specifically, the wiring output component 4 includes a connecting plate 41 electrically coupled to the positive electrode or the negative electrode of the battery module 2 that is not connected to the connecting piece 3 and the connecting bar 22. The connecting plate 41 is provided with an output plate 42 on its one side away from a bottom of the box 1. The output plate 42 extends to protrude beyond the battery module 2 and is coupled to the collection line. The output plate 42 includes a lead-out portion 421 and an output portion 422. The lead-out portion 421 is connected to the connecting plate 41 and extends along a side of the battery module 2 in a direction away from the bottom of the box 1. The output portion 422 extends from the lead-out portion 421 along an upper surface of the battery module 2 and is coupled to the collection line.

In this embodiment, the positive electrode and the negative electrode of the two battery modules 2 connected to the two connecting plates 41 are arranged facing each other, and the output portion 422 extends along the upper surface of its connected battery module 2 in a direction away from the other battery module 2. When the positive electrode and the negative electrode of the two battery module 2 connected to the two connecting plates 41 are arranged back to back, the output portion 422 extends along the upper surface of its connected battery module 2 in a direction toward the other battery module 2. An extending direction of the output portion 422 depends on the relative positions of the positive electrode and the negative electrode of the two battery modules 2, which is not limited herein.

As shown in FIGs. 1 and 2, after the two battery modules 2 are coupled, the two battery modules 2 are placed into the bottom shell of the box 1, and then the filling and fixing layer 5 is filled and solidified in gaps between the box 1 and the battery modules 2. The filling and fixing layer 5 encapsulates and secures the battery module 2, providing protection and shock absorption. The filling and fixing layer 5 replaces traditional fixing components such as end plates and fixing plates, and can also effectively reduce the overall weight of the battery pack 100, contributing to weight reduction objectives.

In some embodiments, the filling and fixing layer 5 is a foam adhesive layer. Specifically, after the two battery modules 2 are placed into the box 1, foam adhesive is injected into the box 1, and a flat surface tool is used to compress the top, allowing the foam adhesive to fully flow and expand within the box 1, reaching into fine spaces between components. Once the foam adhesive is solidified, it fixes the cell 211, the cell bracket 23, the connecting bar 22, and the connecting piece 3 in place.

## Claims

1. A connecting piece (3), **characterized in that** the connecting piece is configured to connect two battery modules (2) arranged side by side, wherein a positive electrode of one battery module (2) faces a negative electrode of the other battery module (2);
wherein the connecting piece (3) is a "U" shaped structure and comprises two connecting bodies (30) that are parallel to each other and spaced apart, and the two connecting bodies (30) of the connecting piece (3) are respectively connected to the positive electrode and the negative electrode facing each other of the two battery modules (2) to couple the two battery modules (2) in series.

2. The connecting piece (3) according to claim 1, **characterized in that** the connecting piece (3) is provided with through holes (31) spaced apart; wherein the connecting piece (3) is positioned on the batter module (2) by means of the through holes (31) being sleeved over positioning blocks (232) on a cell bracket (23) of the battery module (2).

3. A battery pack (100), **characterized by** comprising two wiring output components (4), two battery modules (2) arranged side by side, and the connecting piece (3) as claimed in claim 1 or 2; wherein each battery module (2) comprises a plurality of cell groups (21), wherein each cell group (21) comprises a plurality of cells (211), with a positive pole (2111) and a negative electrode (2112) of each cell (211) respectively arranged at opposite ends of the cell (211) along a length direction of the cell (211); the cell group (21) comprises a first side (2101) and a second side (2102) that are opposite to each other; in the same cell group (21), the positive poles of all cells (211) are located on the first side (2101) of the cell group (21), while the negative poles of all cells (211) are located on the second side (2102) of the cell group (21);
wherein the plurality of cell groups (21) are sequentially arranged along a first direction (X), and all cells (211) in each battery module (2) are arranged along a second direction (Y), wherein the second direction (Y) is perpendicular to the first direction (X); a positive electrode of any cell group (21) and a negative electrode of an adjacent cell group (21) are located on the same side of the battery module (2);
wherein the plurality of cell groups (21) are sequentially coupled in series in the first direction (X); the two battery modules (2) are arranged side by side along the second direction (Y), wherein the positive electrode of one battery module (2) and the negative electrode of the other battery modules (2) are facing each other and are electrically coupled together through the connecting piece (3), to achieve series connection between the two battery modules (2); the negative electrode of the one battery module (2) and the positive electrode of the other battery module (2) are respectively connected to the two wiring output components (4).

4. The battery pack (100) according to claim 3, **characterized by** further comprising connecting bars (22), wherein any two adjacent cell groups (21) in each battery module (2) are coupled in series through the connecting bar (22).

5. The battery pack according to claim 4, **characterized in that** a positive electrode of a cell group (21) located at one end of the battery module (2) along the first direction (X), which is not connected to the connecting bars (22), serves as the positive electrode of the battery module (2); a negative electrode of a cell group (21) located at an opposite end of the battery module (2) along the first direction (X), which is not connected to the connecting bar (22), serves as the negative electrode of the battery module (2).

6. The battery pack (100) according to claim 5, **characterized in that** the positive electrode and the negative electrode of the two battery modules (2) that are not connected to the connecting piece (3) and the connecting bar (22) are respectively coupled to the two wiring output components (4), and the wiring output components (4) are coupled to acquisition lines to complete an output or an input of electrical energy of the battery pack (100).

7. The battery pack (100) according to any one of claims 3 to 6, **characterized in that** the plurality of cells (211) of each cell group (21) are arranged in at least one of the following manners:
the plurality of cells (211) are sequentially arranged along the first direction X; and
the plurality of cells (211) are sequentially arranged along a third direction (Z), wherein the third direction (Z), the second direction (Y), and the first direction X are perpendicular to each other.

8. The battery pack (100) according to claim 3, **characterized by** further comprising a box (1) and a filling and fixing layer (5), wherein the two battery modules (2) are arranged side by side in the box (1) along the second direction (Y); the filling and fixing layer (5) is arranged in gaps between the box (1) and the battery module (2); the filling and fixing layer (5) is a foam adhesive fixing layer.

9. The battery pack (100) according to any one of claims 3 to 7, **characterized in that** the battery module (2) comprises two cell brackets (23), which are parallel to each other and spaced apart along the second direction (Y); wherein the cell brackets (23) are provided with a plurality of mounting holes (231), and two ends of the cells (211) are respectively inserted into a corresponding group of mounting holes (231) on the two cell brackets (23).

10. The battery pack (100) according to claim 9, **characterized in that** the cell bracket (23) is provided with positioning blocks (232) on its one side facing away from the cells (211); wherein a shape of the positioning block (232) matches a shape of a through hole (31) on the connecting piece (3); the connecting piece (3) is positioned on the batter module (2) by means of the through hole (31) being sleeved over the positioning block (232).

11. The battery pack (100) according to claim 10, **characterized in that** the battery module (2) further comprises a fixing member (24) arranged parallel to the second direction (Y), with two ends of the fixing member (24) connected to two cell brackets (23) respectively to fix the cells (211) of the battery module (2) between the two cell brackets (23).

12. The battery pack (100) according to claim 6, **characterized by** further comprising a box (1) for accommodating the battery module (2); wherein the wiring output component (4) comprises a connecting plate (41) electrically coupled to the positive electrode or the negative electrode of the battery module (2) that is not connected to the connecting piece (3) and the connection bar (22); wherein the connecting plate (41) is provided with an output plate (42) on its one side away from a bottom of the box (1); the output plate (42) extends to protrude beyond the battery module (2) and is coupled to the collection line.

13. The battery pack (100) according to claim 12, **characterized in that** the output plate (42) comprises a lead-out portion (421) and an output portion (422), wherein the lead-out portion (421) is connected to the connecting plate (41) and extends along one side of the battery module (2) in a direction away from the bottom of the box (1); the output portion (422) extends from the lead-out portion (421) along an upper surface of the battery module (2) and coupled to the collection line.

14. The battery pack (100) according to claim 13, **characterized in that** the positive electrode and negative electrode of the two battery modules (2) connected to the two connecting plates (41) of the two wiring output components (4) are arranged facing each other, and the output portion (422) extends along the upper surface of its connected battery module (2) in a direction away from the other battery module (2).

15. The battery pack (100) according to claim 13, **characterized in that** the positive electrode and negative electrode of the two battery modules (2) connected to the connecting plates (41) of the two wiring output components (4) are arranged back to back, the output portion (422) extends along the upper surface of its connected battery module (2) in a direction toward the other battery module (2).
